# FASCICULE DE BREVET EUROPEEN

(11) **EP 1 216 566 B1**
(45) Date de publication et mention de la délivrance du brevet: **23.07.2008**
(21) Numéro de dépôt: 00964338.8
(22) Date de dépôt: 21.09.2000
(51) Int. Cl.: H04M 1/60

(54) **DISPOSITIF DE COMBINAISON DE SIGNAUX D'ENVIRONNEMENT ET DE TELECOMMMUNICATIONS**
VORRICHTUNG ZUR KOMBINATION VON UMGEBUNGS- UND KOMMUNIKATIONSSIGNALEN
DEVICE FOR COMBINING ENVIRONMENT AND TELECOMMUNICATION SIGNALS

(30) Priorité: 29.09.1999 FR 9912372
(43) Date de publication de la demande: 26.06.2002
(73) Titulaire: FRANCE TELECOM, 75015 Paris (FR)
(72) Inventeur: VAREILLE, Aimé, F-38130 Echirolles (FR); PANIEZ, Patrick, F-38240 Meylan (FR)
(74) Mandataire: Cabinet Martinet & Lapoux
(86) Numéro de dépôt international: PCT/FR2000/002616
(87) Numéro de publication internationale: WO 2001/024483

(56) Documents cités:
- EP-A- 0 840 465
- EP-A- 0 892 534
- FR-A- 2 743 682
- US-A- 5 524 058

## Description

La présente invention concerne un dispositif dans lequel des signaux d'environnement captés dans un environnement donné et des signaux de télécommunications sont à combiner dans un dispositif mobile associé à un terminal radiotéléphonique.

Un tel dispositif est comparable à un casque muni généralement de deux écouteurs et d'un microphone par exemple pour écouter de la musique enregistrée sur des bandes magnétiques ou des compacts disques dans un baladeur (walkman), ou pour participer à des communications téléphoniques (EP-A-0 892 534), ou pour écouter ou enregistrer des sons provenant d'un appareil multimédia et/ou informatique.

Par ailleurs, des casques dits actifs par exemple pour des mécaniciens au sol dans un aéroport sont destinés à être en permanence reliés à d'autres casques actifs à travers un réseau de télécommunications privé.

Le brevet US-A-5 524 058 décrit une capsule d'écouteur d'un combiné téléphonique ou d'un casque qui contient deux microphones dos à dos détectant le bruit environnant interne et externe à la capsule. Le signal d'une source ou ligne de communication reçu par un transducteur d'écouteur dans la capsule a une amplitude sensiblement égale à celle du bruit, mais est sensiblement en opposition de phase avec le bruit environnant pour certaines fréquences de manière à maximiser l'annulation du bruit environnant par opposition de phase.

L'utilisateur n'écoute alors que le signal de la source ou ligne de communication sensiblement sans le bruit environnant. La combinaison des signaux provenant des microphones et des signaux de la source ou ligne de communication selon brevet US-A-5 524 058 est imposée systématiquement, sans aucune autre possibilité de combinaison de signaux de son.

Aucun de ces casques et autres dispositifs portables analogues connus ne gère un mélange intelligent des signaux acoustiques ou physico-chimiques provenant de l'espace sonore et physique naturel environnant le casque et de communications, notamment de télécommunications, de proximité.

La présente invention a ainsi pour objectif de remédier aux inconvénients des casques d'écoute antérieurs en fournissant un dispositif configurable pour conférer des combinaisons et répartitions intelligentes des signaux de son provenant de l'environnement du dispositif et des signaux de son échangés dans des télécommunications entre le dispositif et au moins un terminal radiotéléphonique. En d'autres termes, l'invention vise à fournir un dispositif qui permet "de mieux entendre pour mieux écouter".

A cette fin, un dispositif de combinaison de signaux acoustiques d'environnement et de télécommunications comprenant une unité individuelle mobile munie au moins d'un écouteur, d'un premier microphone, d'une prise téléphonique pour un terminal radiotéléphonique, et de moyens énoncés dans la revendication 1.

Grâce aux premiers moyens pour mélanger et pour répartir sélectivement, les signaux de son de l'environnement du dispositif et des signaux de télécommunications notamment échangés avec le terminal radiotéléphonique ainsi que des signaux de son de l'utilisateur captés par le premier microphone peuvent être mélangés et/ou diffusés auprès de l'utilisateur, ou bien automatiquement selon un programme approprié.

Comme on le verra dans la suite, les équipements environnants sont respectivement reliés à des unités environnementales respectivement fixées par exemple au domicile, au lieu de travail et dans le véhicule de l'utilisateur ainsi que dans des lieux publics, des salles de réunion et des salles de spectacle.

De manière à assurer une interactivité entre ces équipements et l'unité individuelle, le moyen pour établir inclut un clavier, et/ou au moins un détecteur de mouvement et/ou un détecteur biomédical et/ou un détecteur physico-chimique et/ou un moyen de reconnaissance vocale lié au premier microphone et établit des commandes à transmettre vers les équipements environnants à travers le premier moyen d'émission, mais également pour sélectionner des connexions dans une unité environnementale.

De préférence, des signaux de voix échangés au cours d'une communication téléphonique avec le terminal radiotéléphonique sont prioritaires dans les premiers moyens pour mélanger et répartir. A ce sujet, le dispositif selon l'invention comprend un moyen pour détecter un signal de sonnerie d'appel transmis par le terminal radiotéléphonique afin que les premiers moyens pour mélanger et répartir ne soient traversés que par des signaux de voix échangés entre le terminal radiotéléphonique et l'écouteur et le premier microphone en réponse au signal de sonnerie d'appel détecté, et un moyen pour prendre et libérer un canal téléphonique à travers le terminal radiotéléphonique afin que les premiers moyens pour mélanger et répartir ne soient traversés que par des signaux de voix échangés entre le terminal radiotéléphonique et l'écouteur et le premier microphone entre la prise et la libération du canal téléphonique.

Selon une autre caractéristique de l'invention, le dispositif comprend un moyen pour témoigner une communication téléphonique avec le terminal radiotéléphonique ou interphonique avec un équipement environnant à l'extérieur de l'unité individuelle, afin que l'utilisateur du dispositif ne soit pas dérangé lorsqu'il est en communication téléphonique.

De préférence, l'unité individuelle comprend au moins un microphone externe à l'extérieur de l'unité individuelle et un moyen pour soustraire du son externe capté par le microphone externe au son capté par le premier microphone ; cette soustraction peut-être un filtrage intelligent des bruits ou signalisations caractéristiques de dangers, tels que avertisseurs sonores, sirènes, freinages, chocs, qui peuvent alerter l'individu.

Le dispositif selon l'invention contribue à "mieux percevoir pour mieux réagir" grâce au fait que l'unité individuelle comprend un moyen d'affichage et/ou un moyen de stimulation électrique et/ou mécanique. Cette caractéristique favorise la perception d'un malentendant sur les bruits de son environnement ou simplement des appels téléphoniques : les sons captés par les microphones de son unité ou de l'environnement sont traduits en affichages visuels ou en stimuli électriques ou mécaniques.

Avantageusement, l'unité individuelle comprend au moins un détecteur biomédical et/ou au moins un détecteur physico-chimique qui peuvent renseigner la personne ou son environnement sur les caractéristiques de son état médical ou de son environnement physico-chimique. Ces détecteurs accroissent la perception de l'utilisateur ou transmettent des alertes nécessaires à sa sécurité.

Avantageusement, la partie individuelle comprend au moins un détecteur de forme et de mouvement pour faciliter la lecture sur les lèvres des muets, détecter une perte de connaissance ou informer un aveugle des caractéristiques de son environnement comme par exemple des obstacles, des véhicules ou des personnes en mouvement.

Selon une autre caractéristique essentielle de l'invention, le dispositif comprend une unité environnementale qui inclut un deuxième moyen d'émission pour émettre des signaux de son et/ou d'affichage et/ou de stimulation transmis par les équipements environnants vers le premier moyen de réception, un deuxième moyen de réception pour recevoir des signaux de son émis par le premier moyen d'émission vers les équipements environnants, un deuxième moyen pour mélanger sélectivement des signaux de son et/ou d'affichage et/ou de stimulation transmis par les équipements environnants vers le deuxième moyen d'émission, et un deuxième moyen pour répartir sélectivement un signal de son reçu par le deuxième moyen de réception vers les équipements environnants.

La sélection de connexions dans les deuxièmes moyens pour mélanger et répartir peut être soit commandée localement par exemple au moyen d'un clavier de l'unité environnementale, soit télécommandée depuis le moyen pour établir des commandes dans l'unité individuelle.

En fonction des besoins de l'utilisateur et du lieu d'implantation de l'unité environnementale, celle-ci peut comprendre :
- un moyen relié au deuxième moyen pour mélanger pour capter au moins un son environnant l'unité environnementale ;
- un moyen d'adaptation téléphonique et/ou interphonique et/ou informatique pour relier de manière adaptable le deuxième moyen pour mélanger et le deuxième moyen pour répartir à un terminal téléphonique et/ou un interphone et/ou un terminal informatique ;
- un moyen d'adaptation multimédia pour relier de manière adaptable le deuxième moyen pour mélanger et le deuxième moyen pour répartir à un récepteur de radiodiffusion et/ou un téléviseur et/ou un appareil à haute fidélité et/ou un appareil multimédia ;
- une interface entre les deuxièmes moyens pour mélanger et répartir et des machines afin que les machines transmettent des signaux d'alarme vers l'écouteur de l'unité individuelle à travers le deuxième moyen d'émission et le premier moyen de réception et reçoivent des signaux de commande notamment depuis le premier microphone de l'unité individuelle à travers le premier moyen d'émission et le deuxième moyen de réception.

Avantageusement, les premiers moyens d'émission et de réception dans l'unité individuelle et les deuxièmes moyens d'émission et de réception dans l'unité environnementale sont reliés par une liaison de radiocommunication de proximité, de préférence à allocation dynamique de canal.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme du dispositif de combinaison de signaux d'environnement et de télécommunications selon l'invention, dans lequel une unité individuelle mobile est montrée en détail ; et
- la figure 2 est un bloc-diagramme détaillé d'une unité environnementale fixe incluse dans le dispositif de la figure 1.

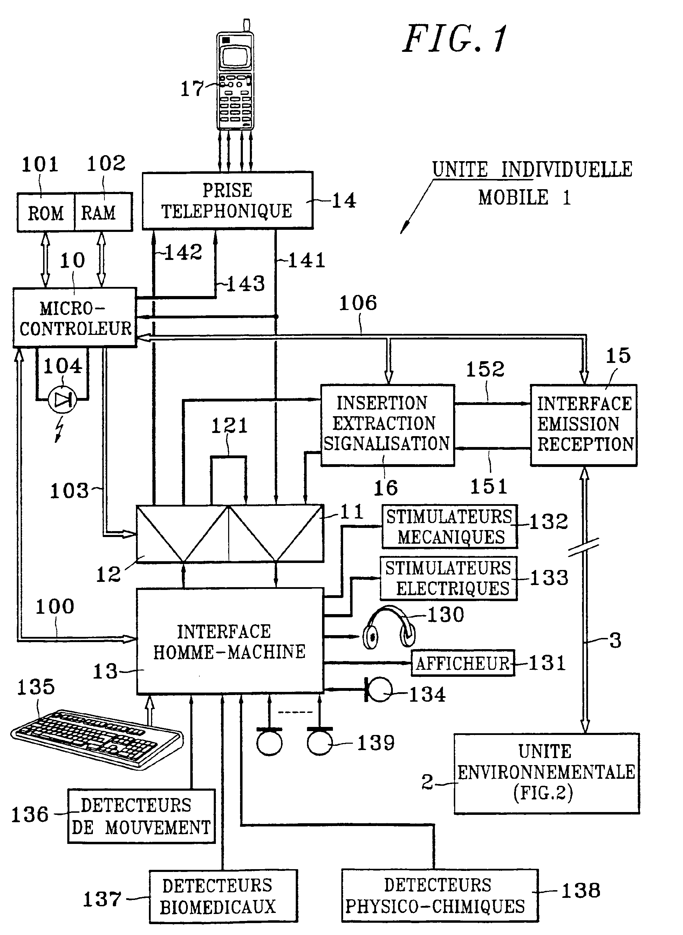

Comme montré à la figure 1, le dispositif de combinaison de signaux acoustiques d'environnement et de télécommunications selon une réalisation préférée de l'invention comprend une unité individuelle 1, qui est mobile avec l'utilisateur de celle-ci et portable avec un terminal radiotéléphonique mobile 17, et au moins une unité environnementale 2 qui est fixe dans un lieu prédéterminé. Plusieurs unités 2 selon l'invention, situées dans des lieux de travail, bâtiments, bureaux, chantiers, salles de réunion ou salles de spectacle, véhicules fréquentés par l'utilisateur du dispositif sont susceptibles de communiquer séparément ou simultanément avec l'unité de base individuelle 1. De préférence, une unité 2 est reliée à l'unité 1 à travers une liaison 3 de type radioélectrique pour communication téléphonique locale, typiquement selon la norme CT1 ou CT2 ; un canal radioélectrique analogique ou numérique de trafic en mode duplex en fréquence est alloué dynamiquement pour chaque appel entre l'unité 1 et l'une des unités 2. Selon d'autres variantes, la liaison 3 peut être réalisée par un câble souple de télécommunication ou par une liaison infrarouge.

Comme montré en détail à la figure 1, l'unité de base individuelle mobile 1 comprend essentiellement un microcontrôleur 10, un circuit de connexion de voix constitué par un mélangeur 11 et un répartiteur 12, une interface homme-machine 13, une prise téléphonique 14, une interface d'émission et de réception 15, et un circuit d'insertion-extraction de signalisation 16.

Le microcontrôleur 10 est associé classiquement à une mémoire ROM 101 contenant notamment un identificateur de l'unité 1 et des programmes de gestion de communication de l'unité 1 et à une mémoire de données RAM 102, comme cela apparaîtra ci-après. Le microcontrôleur 10 gère des échanges notamment de signaux de voix entre les différents moyens fonctionnels essentiels de l'unité 1 principalement à travers le circuit de connexion de voix 11-12 afin que l'ensemble des signaux de voix selon la configuration souhaitée par l'utilisateur converge vers deux écouteurs 130 d'un casque porté par l'utilisateur, ou dans le cas où celui-ci est malentendant, vers des afficheurs 131 ou vers des stimulateurs mécaniques 132 ou électriques 133.

L'interface homme-machine 13 délivre sélectivement des commandes pour le microcontrôleur 10 via un bus 100 en réponse à des instructions données par l'utilisateur au moyen au moins d'un microphone ou d'une antenne acoustique de préférence directif 134, ou d'un clavier ou de boutons poussoirs 135, ou le cas échéant, à l'aide de détecteurs de mouvement 136, de détecteurs biomédicaux 137 et de détecteurs physico-chimiques 138. Les détecteurs de mouvement 136 peuvent être des capteurs traduisant un langage gestuel d'un handicapé moteur ou d'un muet ou peuvent être un système vidéo de lecture sur les lèvres pour un muet ; certains détecteurs de mouvement 136 peuvent également détecter des formes et renseigner un utilisateur aveugle d'obstacles ou de véhicules se déplaçant. Les détecteurs biomédicaux 137 détectent typiquement l'état médical de l'utilisateur et peuvent le prévenir d'une prise de médicament ou alerter par téléphone d'anomalies médicales pouvant mettre sa vie en danger dans le cadre d'une télésurveillance médicale. Les détecteurs physico-chimiques 138 renseignent typiquement l'individu sur les caractéristiques de son environnement comme la présence de gaz nocifs ou explosifs, ou de champs électromagnétiques anormaux ou de poussières allergènes ou de radioactivité. Dans le clavier ou dans l'ensemble des boutons poussoirs 135 est prévu un bouton spécifique pour appel interphonique et un bouton spécifique pour appel téléphonique de détresse. L'interface 13 sélectionne, par comparaison à une bibliothèque de commandes prémémorisées, des commandes destinées au microcontrôleur 10 après conversion analogique-numérique et reconnaissance vocale lorsqu'elles proviennent du microphone 134, ou après décodage lorsqu'elles proviennent du clavier 135 ou des détecteurs 136, 137 et 138. Ces commandes sont principalement destinées à la configuration de l'unité 1 par exemple en autorisant des transmissions vocales et/ou de signalisation et/ou de données à travers la prise téléphonique 14 et/ou l'interface d'émission et réception 15, ou bien seulement un retour en local de la voix de l'utilisateur captée par le microphone 134 sans des sons environnant le casque captés par des microphones ou antennes acoustiques d'ambiance 139, de préférence de type omnidirectionnel, reliés à l'interface 13 vers les écouteurs 130.

Ces diverses configurations de l'unité 1 sont sélectionnées dans le circuit de connexion 11-12 par le microcontrôleur 10 à travers un bus de sélection 103.

Le mélangeur 11 comprend trois entrées reliées respectivement à une sortie du répartiteur 12 de manière à reboucler en 121 le son capté par le microphone 134 après filtrage des sons captés par les microphones 139 vers les écouteurs 130 à travers l'interface 13, à une paire de fils 141 de la prise téléphonique 14 constituant une voie de réception téléphonique, et à une sortie 151 de l'interface d'émission et de réception 15 à travers le circuit d'insertion-extraction de signalisation 16. Le mélangeur 11 restitue ces signaux de son sélectionnés par le microcontrôleur 10 aux écouteurs 130 ou aux afficheurs 131 ou aux stimulateurs mécaniques 132 ou aux stimulateurs électriques 133 à travers l'interface 13. Un stimulateur mécanique peut être un simple vibreur. Les informations des stimulateurs et les alertes peuvent être délivrés sous forme de messages vocaux.

Le répartiteur 12 reçoit des signaux de son tels que la voix de l'utilisateur captée par le microphone 134 et filtrée comparativement au son ambiant capté par les microphones 139, ou bien des instructions à deux audiofréquences transmises par le clavier 135, ou les détecteurs de mouvement 136, ou les détecteurs biomédicaux 137, ou les détecteurs physico-chimiques 138 à travers l'interface 13. Ces signaux de son sont diffusés en fonction de la configuration sélectionnée par l'utilisateur à travers le microcontrôleur 10 du répartiteur 12 vers trois sorties respectivement reliées à une paire de fils 142 de la prise téléphonique 14 constituant une voie d'émission téléphonique, une entrée 152 de l'interface 15 à travers le circuit d'insertion-extraction de signalisation 16 et à la première entrée du mélangeur 11 à travers la boucle 121.

La prise 14 est une prise téléphonique conventionnelle à quatre paires de contact pour être enfichée dans le terminal radiotéléphonique mobile 17 par exemple de type GSM ou DCS 1800. Outre les deux paires de fils précitées 141 et 142 dans la liaison entre le terminal radiotéléphonique 17 et le circuit de connexion 11-12, une troisième paire de fils 143 relie la prise téléphonique 14 au microcontrôleur 10 qui est également relié à la paire de fils de réception 141. Dans la paire de fils 141, le microcontrôleur détecte des signalisations téléphoniques, telles qu'un signal de sonnerie d'appel, et dans la troisième paire de fils 143 le microcontrôleur 10 transmet vers le terminal radiotéléphonique 17 un signal de prise ou de libération de canal téléphonique en réponse à une commande vocale particulière captée par le microphone 134 ou en réponse à la sollicitation d'au moins une touche prédéterminée du clavier 135 ou d'un détecteur prédéterminé 136 à 138. Lorsque le microcontrôleur détecte un signal de sonnerie d'appel dans la paire de fils 141 ou une commande de prise de canal téléphonique élaborée par l'interface 13, il relie seulement la voie de réception téléphonique 141 à l'entrée du mélangeur 11 et la sortie du répartiteur 12 seulement à la voie d'émission téléphonique 142 ; les échanges de signaux téléphoniques entre la prise 14 et l'ensemble écouteurs 130 et microphone 134 sont prioritaires sur la transmission des autres signaux dans le circuit de connexion 11-12.

En variante, l'interface 13 commande la composition automatique d'au moins un numéro de téléphone particulier à travers le microcontrôleur 10 dans le terminal radiotéléphonique 17 à la suite de la sollicitation d'une touche de détresse prédéterminée sur le clavier 135 ou de l'un des détecteurs 136, 137 ou 138.

Un témoin lumineux 104, tel qu'une diode électroluminescente LED, fixé sur une partie visible du casque est activé par le microcontrôleur 10 pendant une communication téléphonique, entre un signal de prise et un signal de libération dans la paire de fils 143 afin de signaler aux tiers proches de l'utilisateur que celui-ci est en communication téléphonique. De même, le témoin 104 est allumé lorsque l'interface 13 est traversée par une communication interphonique de l'utilisateur entre deux sollicitations consécutives du bouton d'appel interphonique, ou après que le circuit d'insertion-extraction de signalisation 16 transmet une demande de communication interphonique d'un locuteur distant proche de l'unité 2. De préférence, le son capté par le microphone de voix 134 est traité dans l'interface homme-machine 13 pour y supprimer le son ambiant capté par les microphones 139 et est rebouclé en 121 sur la voie de réception entre le répartiteur 12 et le mélangeur 11, afin que la voix de l'utilisateur épurée des sons ambiants soit transmise au locuteur distant et retransmise aux écouteurs 130 pendant toute communication téléphonique ou interphonique, mélangée à la voix du locuteur distant.

L'interface d'émission-réception 15 est par exemple une carte amovible de l'unité 1, adaptée aux caractéristiques de transmission de la liaison 3. En particulier l'interface 15 pour une liaison 3 de type radioélectrique comprend un étage de transposition en fréquence intermédiaire, un modulateur-démodulateur, un codeur-décodeur et un convertisseur analogique-numérique pour la réception et un convertisseur numérique-analogique pour l'émission.

Le circuit d'insertion-extraction de signalisation 16 est adapté au protocole de communication entre les unités 1 et 2 à travers la liaison 3, et en particulier détecte l'identification d'une unité 2 dans les messages transmis par celle-ci et insère l'identification lue en mémoire ROM 101 de l'unité 1 dans chaque message transmis par celle-ci. D'une manière générale, le circuit 16 insère et extrait de la signalisation pour reconnaître si le message reçu ou transmis est un signal de parole à transmettre au mélangeur 11 ou transmis par le répartiteur 12 ou un message de signalisation protocolaire selon le type de communication téléphonique, interphonique ou de données. A l'entrée reliée au répartiteur 12 et à la sortie reliée au mélangeur 11, le circuit 16 comprend un convertisseur analogique-numérique et un convertisseur numérique-analogique respectivement.

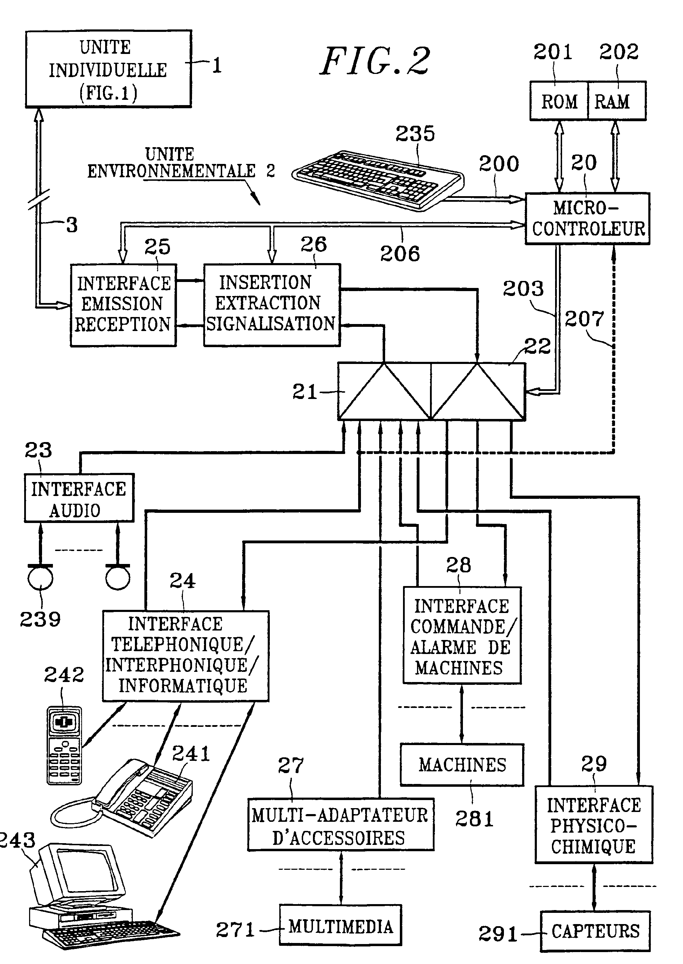

Comme montré en détail à la figure 2, une unité environnementale fixe 2 comprend, d'une manière réciproque à l'unité 1, un microcontrôleur 20, un circuit de connexion comprenant un mélangeur 21 et un répartiteur 22, une interface audio 23, une interface téléphonique/interphonique/informatique 24, une interface d'émission-réception 25 et un circuit d'insertion-extraction de signalisation 26, ainsi qu'un multi-adaptateur d'accessoires 27, une interface de commande/alarme de machines 28 et une interface physico-chimique 29.

D'une manière analogue au rôle de l'interface 15 et du circuit 16, l'interface 25 et le circuit 26 dans l'unité 2 sont adaptées aux caractéristiques de transmission de la liaison 3 de manière à recevoir du mélangeur 21 et à transmettre au répartiteur 22 des signaux analogiques de son, c'est-à-dire de la voix et des commandes et données en audiofréquence, et à insérer en émission et à extraire en réception de la signalisation établie et analysée par le microcontrôleur 20, via un bus 206.

Le microcontrôleur 20 est associé également à une mémoire notamment d'identificateur et de programmes de gestion de communication ROM 201 et à une mémoire de données RAM 202. Il est relié à travers un bus de commande 200 à un clavier de configuration 235. Optionnellement, le microcontrôleur 20 peut recevoir des commandes à travers tout autre moyen de commande, via une interface appropriée, tel que ensemble de boutons poussoirs, détecteurs de mouvement gestuel ou des lèvres, microphones avec interface de reconnaissance vocale, etc., ou provenant d'un poste d'interphonie ou d'un terminal téléphonique ou téléinformatique à travers l'interface 24, comme indiqué en 207. Ces commandes servent principalement à configurer via un bus 203 le circuit de connexion 21-22, c'est-à-dire à relier sélectivement l'une des entrées du mélangeur 21 ou plusieurs de celles-ci à la voie d'émission vers le circuit 26 et l'interface 25 et à relier sélectivement la voie de réception en entrée du répartiteur 22 à l'une des sorties de ce répartiteur ou à plusieurs de celles-ci.

Selon la réalisation illustrée à la figure 2, le mélangeur 21 comporte au moins des entrées respectivement reliées aux sorties de l'interface audio 23, de l'interface téléphonique/interphonique/informatique 24, du multi-adaptateur d'accessoires 27, de l'interface de commande de machines 28 et de l'interface physico-chimique 29 ; des sorties du répartiteur 22 sont reliées respectivement au moins à des entrées de l'interface 24, du multi-adaptateur 27 et des interfaces 28 et 29. La configuration du circuit de connexion 21-22 sélectionnée par le clavier 235 ou un moyen analogue permet à l'utilisateur de relier diverses sources "sonores" aux écouteurs 130 à travers principalement le mélangeur 21, le circuit 26, l'interface 25, la liaison 3, l'interface 15, le circuit 16 et le mélangeur 11 et de transmettre de la voix et/ou des commandes depuis l'interface homme-machine 13 à travers le répartiteur 12, le circuit 16 et l'interface 15 dans l'unité individuelle 1, à travers la liaison 3 et à travers l'interface 25, le circuit 26 et le répartiteur 22 dans l'unité 2.

Les interfaces et adaptateur 23, 24, 27, 28 et 29 sont destinés à être connectés à différents moyens de restitution de signaux de son qui peuvent également recevoir des signaux de son ou des signaux de commande dans une bande d'audiofréquence prédéterminée.

L'interface audio 23 est reliée à un ou plusieurs microphones ou antennes acoustiques 239 captant les sons de l'environnement proches de l'unité 2. Par exemple lorsque l'unité 2 est installée dans un véhicule, les microphones 239 sont disposés à l'extérieur du véhicule, dans l'habitable du véhicule et dans le logement recevant le moteur sous le capot du véhicule afin que l'interface 23 respectivement retransmette le bruit de l'environnement extérieur au véhicule notamment de véhicules, piétons et cyclistes à proximité du véhicule, annule du bruit présent à l'intérieur de l'habitacle, et surveille le fonctionnement du moteur pour en extraire des signaux d'alarme. L'interface 23 filtre, amplifie et traite numériquement l'ensemble de ces signaux de son après conversion analogique-numérique et retransmet via la liaison 3 aux écouteurs 131 le bruit extérieur au véhicule sans le bruit intérieur à celui-ci, accompagné éventuellement de signaux d'alarme sur un dysfonctionnement du moteur du véhicule.

L'interface téléphonique/interphonique/informatique 24 comporte notamment une prise pour un poste interphonique et divers ports du type prise téléphonique, sortie de modem, sortie de carte réseau local ou RNIS et sortie d'interface pour carte audio respectivement pour un terminal téléphonique 241 qui peut être un poste téléphonique simple, un poste téléphonique relié à un autocommutateur privé PABX, un radiotéléphone, un poste interphonique 242, un micro-ordinateur 243 par exemple relié à un réseau local ou à un réseau à haut débit, tel que le réseau Internet, un visiophone, un terminal vidéotex, etc. L'utilisateur, porteur de l'unité 1, peut être ainsi en communication duplex avec divers terminaux.

Le multi-adaptateur 27 comporte des prises standard pour être reliées à des accessoires 271 tels qu'un récepteur de radiodiffusion, un poste de télévision, un magnétoscope, un appareil à haute fidélité (Hi Fi), un lecteur de disques compact CD, une console multimédia, etc. Le multi-adaptateur 27 est particulièrement utilisé au domicile de l'utilisateur pour que des programmes radiophoniques ou de télévision aient leurs signaux de son retransmis via à la liaison 3 vers les écouteurs 130 du casque de l'utilisateur.

L'interface 28 est reliée à des machines 281, par exemple des appareils et des équipements domestiques et électroménagers 281, et l'interface 29 est reliée à des capteurs physico-chimiques 28C, par exemple des détecteurs de gaz, poussière, chaleur, humidité, niveaux d'eau, radioactivité 291 lorsque l'unité 1 est située au domicile de l'utilisateur. L'interface 28, 29 retransmet via la liaison 3 vers les écouteurs 130 des signaux d'alarme, y compris des signaux de parole synthétisée ; en sens inverse, au moyen du microphone 134 et/ou du clavier 135 et/ou de détecteurs de mouvement 134, l'interface homme-machine 13 dans l'unité 1 adresse via la liaison 3 diverses commandes aux machines 281 ou capteurs 291 par exemple pour les mettre en marche, programmer une heure de mise en marche, ou arrêter ou commander ou régler une fonction de l'une de ces machines ou capteurs.

Bien qu'en général le clavier 235 ou un moyen de configuration analogue impose une configuration à l'unité 2 à travers le microcontrôleur 20 en sélectionnant des entrées du mélangeur 21 et des sorties du répartiteur 22, une telle configuration dans l'unité 2 peut être gérée à partir de l'interface homme-machine 13 de l'unité individuelle mobile 1 à travers le microcontrôleur 10, et les circuits d'insertion-extraction de signalisation 16 et 26 et le microcontrôleur 20.

Plusieurs unités individuelles mobiles 1 selon l'invention peuvent communiquer avec une ou plusieurs unités environnementales communes 2 à travers un même canal de communication sélectionné à travers l'interface 15 de chaque unité 1, l'une des unités 1 étant considérée comme maître pour programmer en priorité les unités environnementales 2.

En pratique, chacune des unités 1 et 2 se présentent généralement sous la forme d'un boîtier. Essentiellement les éléments 10 à 16 sont contenus dans un boîtier d'une unité individuelle 1 qui, en variante, est intégré au moins en partie dans le casque de l'utilisateur portant les écouteurs 130 et les microphones 134 et 139. De même, les éléments 20 à 29 de l'unité 2 sont contenus dans un boîtier qui peut être fixé contre un mur ou sur une table ou dans un tableau de bord ou un accoudoir. L'unité 1 est autonome électriquement et alimenté par pile, tandis que l'unité 2 est alimentée par pile ou par le secteur électrique ou par la batterie d'un véhicule.

L'unité individuelle 1 est susceptible d'être connectée automatiquement à l'unité 2 lors des déplacements de l'utilisateur.

Par exemple, lorsque l'utilisateur sort de chez lui, l'unité 1 devient hors de portée de la zone couverte par une unité 2 fixée à l'intérieur du domicile de l'utilisateur et entrera dans la zone de couverture d'une autre unité 2 installée dans le véhicule de l'utilisateur lorsque celui-ci montera à bord du véhicule. Un capteur d'ouverture de la portière de conducteur, ou un capteur de mise en route du moteur de véhicule, ou un capteur de présence de l'utilisateur à la place du conducteur, relié à l'interface 29 de l'unité correspondante 2 déclenche via le circuit 26 la transmission d'un message à travers la liaison 3 vers les écouteurs 130 de l'unité 1 pour signaler au conducteur que l'unité 1 peut communiquer avec l'unité 2 dans le véhicule.

Selon une autre variante, les capteurs sont reliés à un ordinateur de bord à bord du véhicule qui est lui-même relié à l'interface audio 23. Dans ces conditions, l'utilisateur/conducteur reçoit dans les écouteurs 130 des bruits de circulation captés par des microphones 239 fixés à l'extérieur du véhicule avec annulation interne de bruit à l'intérieur de l'habitacle captés par d'autres microphones 239, des programmes de radio grâce à un poste de radiodiffusion relié au multi-adaptateur 27, et le cas échéant une communication téléphonique grâce à un terminal radiotéléphonique relié à l'interface 24.

Selon une autre variante, un canal de fréquence est réservé dans les liaisons 3 entre les unités 1 et 2 afin qu'un automobiliste puisse communiquer via son unité 1 avec l'unité 1 d'un autre automobiliste se trouvant à proximité. Dans un autre contexte, le canal réservé à des communications entre unités 1 sert à la communication entre des membres d'une famille perdus dans une foule. Dans ces deux cas, le canal de réservation fonctionne comme un canal de communication en mode de diffusion ; une unité 1 envoie à toutes les autres unités 1 proches un signal d'identification spécifique d'une unité individuelle destinataire qui est alors activée en réception pour ensuite recevoir un message proprement dit qui peut être une alarme sonore, un message vocal, etc. retransmis par l'interface 13 vers les écouteurs 131 de l'unité destinataire.

## Revendications

1. Dispositif de combinaison de signaux acoustiques d'environnement et de télécommunications comprenant une unité individuelle mobile (1) munie au moins d'un écouteur (130), d'un premier microphone (134), d'une prise téléphonique (14) pour un terminal radiotéléphonique (17), et un premier moyen (10-11) pour mélanger des signaux de son, **caractérisé en ce que** l'unité individuelle (1) comprend en outre
un premier moyen de réception (15-16) pour recevoir des signaux de son depuis des équipements (239, 241, 242, 243, 271, 281, 291) environnante l'unité individuelle, un premier moyen d'émission (16-15) pour émettre des signaux de son vers lesdits équipements environnants, un premier moyen (12) pour répartir un signal de son, un moyen (13) pour établir des commandes selon des instructions d'utilisateur, et
un moyen (10) pour configurer en fonction des commandes le premier moyen pour mélanger afin que celui-ci mélange sélectivement des signaux de son transmis par le premier microphone, le terminal radiotéléphonique et le premier moyen de réception vers l'écouteur, et le premier moyen pour répartir afin que celui-ci répartisse sélectivement un signal de son transmis par le premier microphone vers l'écouteur, le terminal radiotéléphonique et le premier moyen d'émission.

2. Dispositif conforme à la revendication 1, dans lequel le moyen pour établir (13) inclut un clavier (135), et/ou au moins un détecteur de mouvement (136) et/ou un détecteur biomédical (137) et/ou un détecteur physico-chimique (138) et/ou un moyen de reconnaissance vocale (13) lié au premier microphone (132), et établit des commandes à transmettre vers les équipements environnants à travers le premier moyen d'émission (16-15).

3. Dispositif conforme à la revendication 1 ou 2, dans lequel l'unité individuelle (1) comprend un moyen (10, 13, 141) pour détecter un signal de sonnerie d'appel transmis par le terminal radiotéléphonique (17) afin que les premiers moyens pour mélanger et répartir (10-11-12) ne soient traversés que par des signaux de voix échangés entre le terminal radiotéléphonique (17) et l'écouteur (130) et le premier microphone (134) en réponse au signal de sonnerie d'appel détecté, et un moyen (10, 13, 143) pour prendre et libérer un canal téléphonique à travers le terminal radiotéléphonique (17) afin que les premiers moyens pour mélanger et répartir (10-11-12) ne soient traversés que par des signaux de voix échangés entre le terminal radiotéléphonique (17) et l'écouteur (130) et le premier microphone (134) entre la prise et la libération du canal téléphonique.

4. Dispositif conforme à l'une quelconque des revendications 1 à 3, dans lequel l'unité individuelle (1) comprend un moyen (10, 104) pour témoigner une communication téléphonique avec le terminal radiotéléphonique (17) ou interphonique avec un équipement environnant (242) à l'extérieur de l'unité individuelle (1).

5. Dispositif conforme à l'une quelconque des revendications 1 à 4, dans lequel l'unité individuelle (1) comprend au moins un microphone externe (139) à l'extérieur de l'unité individuelle (1) et un moyen (13) pour soustraire du son externe capté par le microphone externe au son capté par le premier microphone (134).

6. Dispositif conforme à l'une quelconque des revendications 1 à 5, dans lequel l'unité individuelle (1) comprend un moyen d'affichage (131) et/ou un moyen de stimulation (132, 133).

7. Dispositif conforme à l'une quelconque des revendications 1 à 6, dans lequel l'unité individuelle (1) comprend au moins un détecteur biomédical (137) et/ou au moins un détecteur physico-chimique (138).

8. Dispositif conforme à l'une quelconque des revendications 1 à 7, dans lequel l'unité individuelle (1) comprend au moins un détecteur de forme et de mouvement (134).

9. Dispositif conforme à l'une quelconque des revendications 1 à 8, dans lequel l'unité individuelle (1) est portable avec le terminal radiotéléphonique (17).

10. Dispositif conforme à l'une quelconque des revendications 1 à 9, dans lequel l'unité individuelle (1) est intégrée au moins en partie dans un casque portant l'écouteur (130) et le premier microphone (134).

11. Dispositif conforme à l'une quelconque des revendications 1 à 10, comprenant une unité environnementale (2) qui inclut un deuxième moyen d'émission (26-25) pour émettre des signaux de son et/ou d'affichage et/ou de stimulation transmis par les équipements environnants (239, 241, 242, 243, 271, 281, 291) vers le premier moyen de réception (15-16), un deuxième moyen de réception (25-26) pour recevoir des signaux de son émis par le premier moyen d'émission (16-15) vers les équipements environnants, un deuxième moyen (20-21) pour mélanger sélectivement des signaux de son et/ou d'affichage et/ou de stimulation transmis par les équipements environnants vers le deuxième moyen d'émission, et un deuxième moyen (20-22) pour répartir sélectivement un signal de son reçu par le deuxième moyen de réception vers les équipements environnants.

12. Dispositif conforme à la revendication 11, dans lequel l'unité environnementale (2) comprend un moyen (23, 239) relié au deuxième moyen pour capter au moins un son environnant l'unité environnementale (2).

13. Dispositif conforme à la revendication 11 ou 12 dans lequel l'unité environnementale (2) comprend un moyen d'adaptation téléphonique et/ou interphonique et/ou informatique (24) pour relier de manière adaptable le deuxième moyen pour mélanger (20-21) et le deuxième moyen pour répartir (20-22) à un terminal téléphonique (241) et/ou un interphone (242) et/ou un terminal informatique (243).

14. Dispositif conforme à l'une quelconque des revendications 11 à 13, dans lequel l'unité environnementale (2) comprend un moyen d'adaptation multimédia (27) pour relier de manière adaptable le deuxième moyen pour mélanger (20-21) et le deuxième moyen pour répartir (20-22) à un récepteur de radiodiffusion et/ou un téléviseur et/ou un appareil à haute fidélité et/ou un appareil multimédia (271).

15. Dispositif conforme à l'une quelconque des revendications 11 à 14, dans lequel l'unité environnementale (2) comprend une interface (28, 29) entre les deuxièmes moyens pour mélanger et répartir (20-21, 20-22) et des machines (281) et/ou des capteurs (291) afin que ces derniers transmettent des signaux d'alarme vers l'écouteur (130) ou un moyen d'affichage (131) ou un moyen de stimulation (132, 133) de l'unité individuelle (1) à travers le deuxième moyen d'émission (26-25) et le premier moyen de réception (15-16) et reçoivent des signaux de commande notamment depuis le premier microphone (134) de l'unité individuelle (1) à travers le premier moyen d'émission (16-15) et le deuxième moyen de réception (25-26).

16. Dispositif conforme à l'une quelconque des revendications 11 à 15, dans lequel les premiers moyens d'émission et de réception (16-15, 15-16) dans l'unité individuelle (1) et les deuxièmes moyens d'émission et de réception (26-25, 25-26) dans l'unité environnementale (2) sont reliés par une liaison de radiocommunication de proximité (3), de préférence à allocation dynamique de canal.

## Claims

1. Device for combining environment and telecommunications acoustic signals comprising a mobile personal unit (1) furnished at least with a headphone (130), with a first microphone (134), with a telephone socket (14) for a radiotelephone terminal (17), and a first means (10-11) for mixing sound signals, **characterized in that** the personal unit (1) furthermore comprises
a first reception means (15-16) for receiving sound signals from equipment (239, 241, 242, 243 271, 281, 291) surrounding the personal unit, a first sending means (16-15) for sending sound signals to the surrounding equipment, a first means (12) for distributing a sound signal, a means (13) for establishing commands according to user instructions, and
a means (10) for configuring as a function of the commands the first means for mixing so that the latter selectively mixes sound signals transmitted by the first microphone, the radiotelephone terminal and the first reception means to the headphone, and the first means for distributing so that the latter selectively distributes a sound signal transmitted by the first microphone to the headphone, the radiotelephone terminal and the first sending means.

2. evice in accordance with claim 1, in which the means for establishing (13) include a keyboard (135), and/or at least one motion detector (136) and/or biomedical detector (137) and/or physico-chemical detector (138) and/or a voice recognition means (13) tied to the first microphone (132) and establishes commands to be transmitted to the surrounding equipment through the first sending means (16-15).

3. Device in accordance with Claim 1 or 2, in which the personal unit (1) comprises a means (10, 13, 141) for detecting a call ringing signal transmitted by the radiotelephone terminal (17) so that the first means for mixing and distributing (10-11-12) are traversed only by voice signals exchanged between the radiotelephone terminal (17) and the headphone (130) and the first microphone (134) in response to the call ringing signal detected, and a means (10, 13, 143) for seizing and releasing a telephone channel through the radiotelephone terminal (17) so that the first means for mixing and distributing (10-11-12) are traversed only by voice signals exchanged between the radiotelephone terminal (17) and the headphone (130) and the first microphone (134) between the seizure and the release of the telephone channel.

4. Device in accordance with any one of Claims 1 to 3, in which the personal unit (1) comprises a means (10, 104) for affording evidence of a telephone communication with the radiotelephone terminal (17) or interphone communication with a surrounding item of equipment (242) outside the personal unit (1).

5. Device in accordance with any one of Claims 1 to 4, in which the personal unit (1) comprises at least one external microphone (139) outside the personal unit (1) and a means (13) for subtracting external sound picked up by the external microphone from the sound picked up by the first microphone (134).

6. Device in accordance with any one of Claims 1 to 5, in which the personal unit (1) comprises a display means (131) and/or a stimulation means (132, 133).

7. Device in accordance with any one of Claims 1 to 6, in which the personal unit (1) comprises at least one biomedical detector (137) and/or at least one physico-chemical detector (138).

8. Device in accordance with any one of Claims 1 to 7, in which the personal unit (1) comprises at least one shape and motion detector (134).

9. Device in accordance with any one of Claims 1 to 8, in which the personal unit (1) is portable with the radiotelephone terminal (17).

10. Device in accordance with any one of Claims 1 to 9, in which the personal unit (1) is integrated at least in part into a headset bearing the headphone (130) and the first microphone (134).

11. Device in accordance with any one of Claims 1 to 10, comprising an environmental unit (2) which includes a second sending means (26-25) for sending sound and/or display and/or stimulation signals transmitted by the surrounding equipment (239, 241, 242 243, 271, 281, 291) to the first reception means (15-16), a second reception means (25-26) for receiving sound signals sent by the first sending means (16-15) to the surrounding equipment, a second means (20-21) for selectively mixing sound and/or display and/or stimulation signals transmitted by the surrounding equipment to the second sending means, and a second means (20-22) for selectively distributing a sound signal received by the second reception means to the surrounding equipment.

12. Device in accordance with Claim 11, in which the environmental unit (2) comprises a means (23, 239) linked to the second means for picking up at least one sound surrounding the environmental unit (2).

13. Device in accordance with Claim 11 or 12 in which the environmental unit (2) comprises a telephone and/or interphone and/or computer adaptation means (24) for linking in an adaptable manner the second means for mixing (20-21) and the second means for distributing 22) to a telephone terminal (241) and/or an interphone (242) and/or a computer terminal (243).

14. Device in accordance with any one of Claims 11 to 13, in which the environmental unit (2) comprises a multimedia adaptation means (27) for linking in an adaptable manner the second means for mixing (20-21) and the second means for distributing (20-22) to a radiobroadcasting receiver and/or a television and/or a high-fidelity appliance and/or a multimedia appliance (271).

15. Device in accordance with any one of Claims 11 to 14, in which the environmental unit (2) comprises an interface (28, 29) between the second means for mixing and distributing (20-21, 20-22) and machines (281) and sensors (291) so that the latter transmit alarm signals to the headphone (130) or a display means (131) or a stimulation means (132, 133) of the personal unit (1) through the second sending means (26-25) and the first reception means (15-16) and receive control signals in particular from the first microphone (134) of the personal unit (1) through the first sending means (16-15) and the second reception means (25-26).

16. Device in accordance with any one of Claims 11 to 15, in which the first sending and reception means (16-15, 15-16) in the personal unit (1) and the second sending and reception means (26-25, 25-26) in the environmental unit (2) are linked by a proximity radiocommunication link (3), preferably with dynamic channel allocation.

## Patentansprüche

1. Vorrichtung zur Kombination von akustischen Umgebungs- und Telekommunikationssignalen, die eine einzelne mobile Einheit (1), die mit mindestens einem Hörer (130), einem ersten Mikrofon (134), einem Telefonanschluss (14) für ein Funktelefon-Endgerät (17) versehen ist, und eine erste Einrichtung (10-11) aufweist, um Tonsignale zu mischen, **dadurch gekennzeichnet, dass** die einzelne Einheit (1) außerdem einer erste Empfangseinrichtung (15-16), um Tonsignale von Geräten (239, 241, 242, 243, 271, 281, 291) zu empfangen, die die einzelne Einheit umgeben, eine erste Sendeeinrichtung (16-15), um Tonsignale an die umgebenden Geräte zu senden, eine erste Einrichtung (12), um ein Tonsignal zu verteilen, eine Einrichtung (13), um Befehle gemäß Benutzeranweisungen zu erstellen, und eine Einrichtung (10) aufweist, um in Abhängigkeit von den Befehlen die erste Misch-Einrichtung zu konfigurieren, damit diese selektiv Tonsignale mischt, die vom ersten Mikrofon, vom Funktelefon-Endgerät und von der ersten Empfangseinrichtung zum Hörer übertragen werden, und die erste Verteil-Einrichtung zu konfigurieren, damit diese selektiv ein vom ersten Mikrofon übertragenes Tonsignal zum Hörer, zum Funktelefon-Endgerät und zur ersten Sendeeinrichtung verteilt.

2. Vorrichtung nach Anspruch 1, bei der die Erstellungs-Einrichtung (13) eine Tastatur (135) und/oder mindestens einen Bewegungsdetektor (136) und/oder einen biomedizinischen Detektor (137) und/oder einen physikalisch-chemischen Detektor (138) und/oder eine Spracherkennungseinrichtung (13) aufweist, die mit dem ersten Mikrofon (132) verbunden ist und Befehle erstellt, die an die umgebenden Geräte über die erste Sendeeinrichtung (16-15) zu übertragen sind.

3. Vorrichtung nach Anspruch 1 oder 2, bei der die einzelne Einheit (1) eine Einrichtung (10, 13, 141), um ein vom Funktelefon-Endgerät (17) übertragenes Rufklingeltonsignal zu erfassen, damit die ersten Einrichtungen zum Mischen und Verteilen (10-11-12) nur von Sprachsignalen durchquert werden, die zwischen dem Funktelefon-Endgerät (17) und dem Hörer (130) und dem ersten Mikrofon (134) als Antwort auf das erfasste Rufklingeltonsignal ausgetauscht werden, und eine Einrichtung (10, 13, 143) aufweist, um einen Telefonkanal über das Funktelefon-Endgerät (17) zu besetzen und freizugeben, damit die ersten Einrichtungen zum Mischen und Verteilen (10-11-12) nur von Sprachsignalen durchquert werden, die zwischen dem Funktelefon-Endgerät (17) und dem Hörer (130) und dem ersten Mikrofon (134) zwischen dem Besetzen und der Freigabe des Telefonkanals ausgetauscht werden.

4. Vorrichtung nach einem der Ansprüche 1 bis 3, bei der die einzelne Einheit (1) eine Einrichtung (10, 104) aufweist, um eine Telefonverbindung mit dem Funktelefon-Endgerät (17) oder Interphongerät mit einem umgebenden Gerät (242) außerhalb der einzelnen Einheit (1) zu bezeugen.

5. Vorrichtung nach einem der Ansprüche 1 bis 4, bei der die einzelne Einheit (1) mindestens ein externes Mikrofon (139) außerhalb der einzelnen Einheit (1) und eine Einrichtung (13) aufweist, um externen Ton, der vom externen Mikrofon aufgefangen wird, von dem Ton abzuziehen, der vom ersten Mikrofon (134) aufgefangen wird.

6. Vorrichtung nach einem der Ansprüche 1 bis 5, bei der die einzelne Einheit (1) eine Anzeigeeinrichtung (131) und/oder eine Stimulationseinrichtung (132, 133) aufweist.

7. Vorrichtung nach einem der Ansprüche 1 bis 6, bei der die einzelne Einheit (1) mindestens einen biomedizinischen Detektor (137) und/oder mindestens einen physikalisch-chemischen Detektor (138) aufweist.

8. Vorrichtung nach einem der Ansprüche 1 bis 7, bei der die einzelne Einheit (1) mindestens einen Form- und Bewegungsdetektor (134) aufweist.

9. Vorrichtung nach einem der Ansprüche 1 bis 8, bei der die einzelne Einheit (1) mit dem Funktelefon-Endgerät (17) getragen werden kann.

10. Vorrichtung nach einem der Ansprüche 1 bis 9, bei der die einzelne Einheit (1) zumindest zum Teil in einem Helm integriert ist, der den Hörer (130) und das erste Mikrofon (134) trägt.

11. Vorrichtung nach einem der Ansprüche 1 bis 10, die eine Umgebungs-Einheit (2) aufweist, die eine zweite Sendeeinrichtung (26-25), um Ton- und/oder Anzeige- und/oder Stimulationssignale zu senden, die von den Umgebungs-Geräten (239, 241, 242, 243, 271, 281, 291) an die erste Empfangseinrichtung (15-16) übertragen werden, eine zweite Empfangseinrichtung (25-26), um Tonsignale zu empfangen, die von der ersten Sendeeinrichtung (16-15) an die umgebenden Geräte gesendet werden, eine zweite Einrichtung (20-21), um selektiv Ton- und/oder Anzeige- und/oder Stimulationssignale zu mischen, die von den umgebenden Geräten an die zweite Sendeeinrichtung übertragen werden, und eine zweite Einrichtung (20-22) enthält, um selektiv ein von der zweiten Empfangseinrichtung empfangenes Tonsignal an die umgebenden Geräte zu verteilen.

12. Vorrichtung nach Anspruch 11, bei der die umgebende Einheit (2) eine Einrichtung (23, 239) aufweist, die mit der zweiten Einrichtung verbunden ist, um mindestens einen Ton aufzufangen, der die umgebende Einheit (2) umgibt.

13. Vorrichtung nach Anspruch 11 oder 12, bei der die umgebende Einheit (2) eine Einrichtung zur Telefon- und/oder Interphon- und/oder Informatik-Anpassung (24) aufweist, um in anpassbarer Weise die zweite Misch-Einrichtung (20-21) und die zweite Verteil-Einrichtung (20-22) mit einem Telefonendgerät (241) und/oder einem Interphon (242) und/oder einem Informatik-Endgerät (243) zu verbinden.

14. Vorrichtung nach einem der Ansprüche 11 bis 13, bei der die umgebende Einheit (2) eine Multimedia-Anpassungseinrichtung (27) aufweist, um in anpassbarer Weise die zweite Misch-Einrichtung (20-21) und die zweite Verteil-Einrichtung (20-22) mit einem Rundfunkempfänger und/oder einem Fernseher und/oder einem HiFi-Gerät und/oder einem Multimedia-Gerät (271) zu verbinden.

15. Vorrichtung nach einem der Ansprüche 11 bis 14, bei der die umgebende Einheit (2) eine Schnittstelle (28, 29) zwischen den zweiten Einrichtungen zum Mischen und Verteilen (20-21, 20-22) und Maschinen (281) und/oder Sensoren (291) aufweist, damit letztere Alarmsignale an den Hörer (130) oder eine Anzeigeeinrichtung (131) oder eine Stimulationseinrichtung (132, 133) der einzelnen Einheit (1) über die zweite Sendeeinrichtung (26-25) und die erste Empfangseinrichtung (15-16) übertragen und Steuersignale insbesondere vom ersten Mikrofon (134) der einzelnen Einheit (1) über die erste Sendeeinrichtung (16-15) und die zweite Empfangseinrichtung (25-26) empfangen.

16. Vorrichtung nach einem der Ansprüche 11 bis 15, bei der die ersten Sende- und Empfangseinrichtungen (16-15, 15-16) in der einzelnen Einheit (1) und die zweiten Sende- und Empfangseinrichtungen (26-25, 25-26) in der umgebenden Einheit (2) über eine Nahfunkverbindung (3) verbunden sind, vorzugsweise mit dynamischer Kanalzuweisung.
